# FASCICULE DE BREVET EUROPEEN

(11) **EP 0 690 548 B1**
(45) Date de publication et mention de la délivrance du brevet: **02.09.1998**
(21) Numéro de dépôt: 95201750.7
(22) Date de dépôt: 27.06.1995
(51) Int. Cl.: H02K 15/03, H01F 13/00

(54) **Procédé de fabrication d'aimants de ferrite pour moteurs**
Verfahren zur Herstellung von Ferritmagneten für Motoren
Method for producing ferrite magnets for motors

(30) Priorité: 29.06.1994 FR 9408013
(43) Date de publication de la demande: 03.01.1996
(73) Titulaire: PHILIPS COMPOSANTS ET SEMICONDUCTEURS, 92150 Suresnes (FR); Koninklijke Philips Electronics N.V., 5621 BA Eindhoven (NL)
(72) Inventeur: Ledran, Jean-Paul, Société Civile S.P.I.D., F-75008 Paris (FR)
(74) Mandataire: Caron, Jean

(56) Documents cités:
- EP-A- 0 215 441
- WO-A-93/22778
- FR-A- 2 325 942
- US-A- 5 204 569
- PATENT ABSTRACTS OF JAPAN vol. 014 no. 302 (E-0946) ,28 Juin 1990 & JP-A-02 097261 (SONY CORP) 9 Avril 1990,
- PATENT ABSTRACTS OF JAPAN vol. 014 no. 496 (E-0996) ,29 Octobre 1990 & JP-A-02 206343 (SOGO KANKO KAIHATSU KK) 16 Août 1990,
- PATENT ABSTRACTS OF JAPAN vol. 013 no. 078 (E-718) ,22 Février 1989 & JP-A-63 260118 (FUJI ELELCTROCHEM CO LTD) 27 Octobre 1988,

## Description

La présente invention concerne un procédé de fabrication d'un aimant en forme de segment cylindrique pour moteurs, selon lequel on crée une pièce en pressant de la poudre de ferrite sous champ magnétique dans un moule en forme de segment cylindrique, puis on procède à son frittage c'est-à-dire son chauffage à haute température, et enfin on procède à une aimantation en la plaçant entre deux mâchoires en matériau perméable magnétiquement qui sont des armatures d'un électro-aimant et qui sont chacune en contact avec la pièce le long d'une de ses surfaces cylindriques. Un tel aimant est utilisé comme pièce polaire dans des moteurs de petite puissance, par exemple dans les automobiles pour les essuie-glaces, les lève-vitres, etc. Une exigence actuelle pour de tels moteurs est qu'ils soient particulièrement silencieux. Or il existe un bruit dû à la brusque variation du champ magnétique à l'extrémité des pièces polaires. Cette source de bruit est connue sous l'appellation anglaise "cogging torque".

Pour diminuer cet effet, le brevet US-A-5,204,569 enseigne d'utiliser, au moment où l'on crée une pièce en pressant de la poudre de ferrite sous champ magnétique pour orienter les grains, un moule relativement complexe (muni notamment de plusieurs électro-aimants distincts) qui permette d'orienter les grains dans des directions s'écartant graduellement de la direction radiale, lorsqu'on approche des extrémités de la pièce. Un tel procédé implique un moule complexe et coûteux, et dont il est en outre nécessaire de posséder un grand nombre d'exemplaires lorsqu'on désire réaliser le moulage simultané d'une grande quantité de pièces.

Un but de l'invention est de fournir un aimant susceptible de réduire le bruit de "cogging torque", qui soit moulé dans les moules existants destinés à la fabrication des aimants ordinaires de l'art antérieur, donc avec une orientation radiale des grains partout dans une pièce, et qui soit en outre interchangeable avec eux dans la fabrication des moteurs.
A cet effet, pour l'aimantation finale, un élément en matériau perméable magnétiquement d'au moins une des susdites mâchoires laisse en partie découvertes les extrémités longitudinales de la pièce à aimanter, le sens longitudinal étant défini comme pris le long de l'arc de cercle générateur du segment cylindrique.
L'invention est donc basée sur l'idée d'obtenir un champ magnétique non homogène, non pas en jouant sur la forme de la pièce mais en jouant sur son niveau d'aimantation. Elle intervient donc au moment de l'aimantation définitive, qui est une opération rapide, un grand nombre de pièces pouvant être traitées successivement par un seul appareil d'aimantation.
Dans une forme particulière de réalisation, on utilise deux mâchoires comportant chacune un élément en matériau perméable magnétiquement qui laisse en partie découvertes les extrémités de la pièce à aimanter.
Avantageusement on donne aux surfaces d'extrémités du dit élément en matériau perméable magnétiquement une forme courbe, ou une forme plane située en biais par rapport aux axes de la pièce à aimanter.
Dans une variante de réalisation, on constitue une mâchoire composite en trois parties ayant des lignes de séparation au niveau de la surface de contact entre la mâchoire et la pièce de ferrite, et dont seule la partie centrale est en matériau magnétique.
Ceci permet que la mâchoire soit mécaniquement interchangeable avec des mâchoires de l'art antérieur, sans créer de difficultés en ce qui concerne leur fixation sur la machine à aimanter.
De préférence on utilise alors deux parties d'extrémité symétriques.
Ainsi le coût des mâchoires est réduit, puisqu'on fabrique deux fois la même partie d'extrémité.
Un aimant selon l'invention, bien qu'il soit fait d'un ferrite homogène, ayant une forme de secteur simple, et aimanté avec une orientation radiale des grains partout dans l'aimant, comporte au moins une zone d'extrémité dont l'amplitude du flux magnétique dans le ferrite diminue progressivement en approchant de l'extrémité.

Ces aspects de l'invention ainsi que d'autres aspects plus détaillés apparaîtront plus clairement grâce à la description suivante d'un mode de réalisation non limitatif.
La figure 1 représente en coupe un moteur à aimants permanents.
La figure 2A représente, vu latéralement et en coupe selon C-C de la figure 2B, un jeu de mâchoires pour l'aimantation d'une pièce.
La figure 2B représente, vue de dessus, la mâchoire inférieure de la figure 2A.
La figure 3 représente schématiquement une première variante de réalisation d'une mâchoire.
La figure 4 représente schématiquement une seconde variante de réalisation d'une mâchoire.

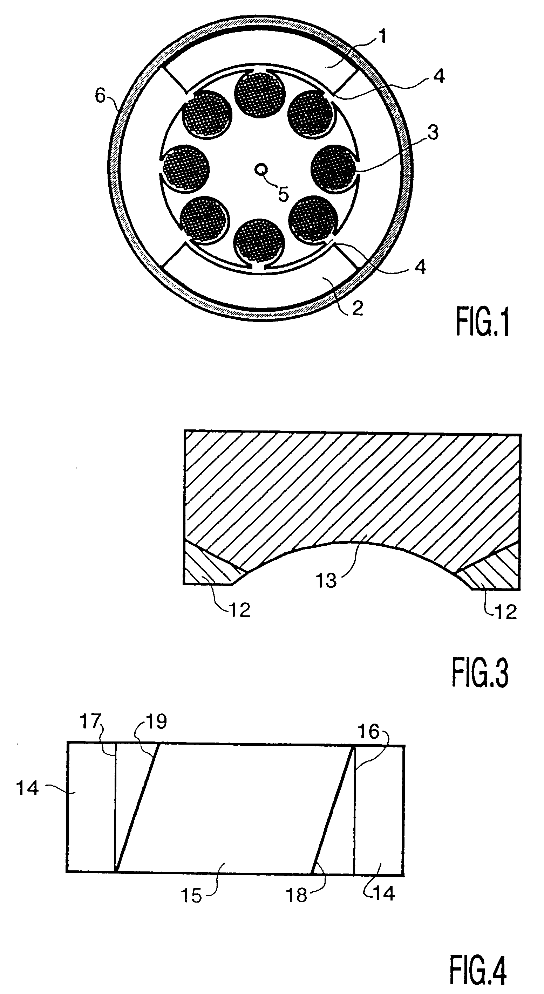

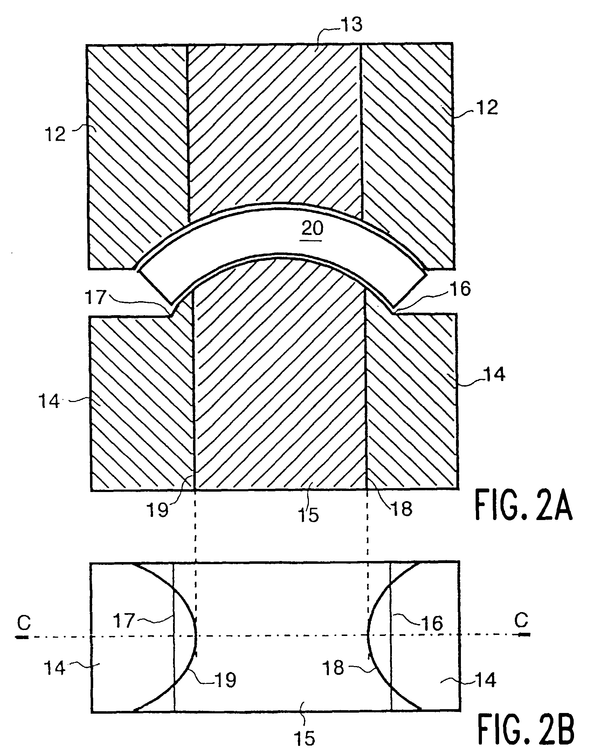

Pour mémoire, la fabrication d'aimants de ferrite de baryum/strontium comporte les opérations suivantes :
- pesée et mélange des matières premières, à savoir les constituants magnétiques et une faible quantité de fondant, dit "seconde phase", dont la composition se rapproche de celle d'un verre, et qui donnera au mélange des propriétés thermoplastiques,
- granulation, c'est-à-dire mise sous forme de petites billes pour éviter des bourrages ultérieurs dans le four de préfrittage,
- préfrittage, c'est-à-dire cuisson à environ 1300° pour réaliser les réactions chimiques qui forment le ferrite,
- broyage en phase aqueuse fournissant des particules d'environ 0,8 µm,
- décantation,
- pressage des particules dans un moule sous champ magnétique pour constituer les pièces, ce qui chasse la majeure partie de l'eau (il en reste environ 13%) et fixe les cristaux de ferrite avec l'orientation désirée,
- désaimantation pour éviter que les pièces ne se déforment ou s'agglutinent entre elles sous l'effet du champ, et démoulage,
- séchage à basse température,
- frittage à environ 1250° dans un four tunnel, qui donne une densité correcte, ainsi que la dureté et les propriétés magnétiques,
- rectification mécanique pour obtenir des cotes précises.
- et enfin aimantation entre deux mâchoires qui sont les armatures d'un électro-aimant et qui délimitent entre elles un espace adapté pour y placer une pièce.
Les deux aimants de ferrite 1 et 2 qui sont représentés dans un moteur, en coupe sur la figure 1, ont chacune la forme d'un segment cylindrique. Ils sont tenus en place, par exemple collés, sur un carter 6 cylindrique. Ils sont aimantés selon des lignes d'induction radiales par rapport au cercle 6, et comportent une surface, extérieure par rapport au centre du moteur, et une surface intérieure, qui sont toutes deux une section de cylindre de révolution. A l'intérieur des deux aimants est présent un rotor cylindrique en acier doux pouvant tourner autour d'un axe 5, et dont la surface extérieure cylindrique passe le plus près possible des aimants 1 et 2. Ce rotor est muni d'encoches 3 dans lesquelles passent les fils électriques d'un bobinage.
Lorsqu'une encoche passe devant l'extrémité 4 d'un aimant, elle y rencontre une discontinuité du champ magnétique qui engendre une variation brutale de couple moteur ce qui produit un bruit de vibration.
Pour éviter cela, au cours de la fabrication des pièces destinées à devenir des aimants, on les aimante au moyen d'un électro-aimant dont les armatures comportent des mâchoires particulières, représentées à la figure 2. Bien entendu ces mâchoires sont des éléments d'armature d'un électro-aimant connu et non représenté.
Sur la figure 2A, une pièce à aimanter 20 est représentée entre une mâchoire supérieure et une mâchoire inférieure. La mâchoire supérieure est faite de trois parties, une partie centrale 13 en fer doux entourée de deux parties d'extrémité 12 en cuivre. De même la mâchoire inférieure est faite de trois parties, une partie centrale 15 en fer doux entourée de deux parties d'extrémité 14 en cuivre.
Ainsi les éléments 13 et 15 en matériau perméable magnétiquement laissent en partie découvertes les extrémités longitudinales de la pièce à aimanter 20, ce qui a pour résultat que l'induction magnétique, lors de l'aimantation de la pièce 20, est concentrée dans le fer des parties 13 et 15, alors que les extrémités de la pièce 20 qui sont situées en face de parties non magnétiques reçoivent une faible induction et sont peu aimantées.
La mâchoire inférieure est représentée vue de dessus sur la figure 2B. La ligne de séparation 18, au niveau de la frontière entre la partie 15 et la partie 14 à droite, a une forme particulière incurvée, dont la convexité est tournée vers le centre de la mâchoire. De même la ligne de séparation 19, au niveau de la frontière entre la partie 15 et la partie 14 à gauche, a la même forme particulière incurvée, dont la convexité est tournée aussi vers le centre de la mâchoire. Les lignes droites 16 et 17 représentent les arêtes d'angles rentrants portant respectivement les mêmes références sur la figure 2A. Des lignes en trait interrompu soulignent la relation entre les surfaces de séparation 18, 19 des parties 15 et 14 sur la figue 2A, et leurs traces 18, 19 visibles à la surface de la mâchoire, sur la figure 2B.
La forme courbe des lignes de séparation entre la partie centrale et les deux parties d'extrémité a pour effet que le flux magnétique par unité de longueur (la longueur de la pièce 20 étant prise dans la direction horizontale sur la figure), dans le ferrite de La pièce 20, décroît de façon progressive vers ses extrémités.
Bien que la forme décrite ci-dessus soit une forme préférée, il est clair que les frontières 18 et 19 des parties en fer doux peuvent aussi avoir d'autres formes. Par exemple leur convexité (18, 19, figure 2B) peut être tournée dans l'autre sens.
On peut aussi utiliser par exemple l'une des formes indiquées sur les figures 3 et 4, à savoir :
- sur la figure 3, une vue latérale en coupe qui est à comparer à celle de la figure 2A, où les parties 12 ont maintenant une section verticale en forme de coin avec des surfaces de séparation entre les parties 12 et 13 qui sont inclinées vers l'extérieur, au lieu d'être verticales comme dans la figure 2A,
- sur la figure 4, une vue de dessus d'une mâchoire, dont la conception est différente de celle de la figure 3, et qui est à comparer à celle de la figure 2B, et où les parties 14 ont une section horizontale en forme de coin, avec des lignes de séparation 18 et 19 entre les parties 14 et 15 qui sont des droites placées en biais par rapport à la mâchoire. Enfin les parties "de cuivre" peuvent aussi bien être faites de n'importe quel autre matériau a-magnétique ou para-magnétique, par exemple du laiton, de l'aluminium, une matière plastique. Elles pourraient même être simplement faites d'air, c'est-à-dire que les parties 13 et 15 en fer doux décrites ci-dessus serait alors seules : les parties indiquées par 12 ou 14 dans la figure 2 disparaîtraient purement et simplement et la mâchoire serait plus simple. La raison pour laquelle on a prévu en pratique les extrémités 12 ou 14 en métal est que la mâchoire est ainsi interchangeable avec une mâchoire de l'art antérieur, sans créer de difficultés en ce qui concerne sa fixation sur la machine à aimanter.
Il est clair également qu'on pourrait n'utiliser qu'une seule mâchoire comportant un élément magnétique qui laisse en partie découvertes les extrémités de la pièce à aimanter, puisqu'une seule partie non magnétique dans le chemin des lignes d'induction suffirait à modifier leur parcours et permettrait d'obtenir l'effet recherché.

## Revendications

1. Procédé de fabrication d'un aimant (20) en forme de segment cylindrique pour moteurs, selon lequel on crée une pièce en pressant de la poudre de ferrite sous champ magnétique dans un moule en forme de segment cylindrique, puis on procède à son frittage c'est-à-dire son chauffage à haute température, et enfin on procède à une aimantation en la plaçant entre deux mâchoires (12, 13 ; 14, 15) en matériau perméable magnétiquement qui sont des armatures d'un électro-aimant et qui sont chacune en contact avec la pièce (20) le long d'une de ses surfaces cylindriques, caractérisé en ce que, pour l'aimantation finale, un élément en matériau perméable magnétiquement (13, 15) d'au moins une des susdites mâchoires laisse en partie découvertes les extrémités longitudinales de la pièce à aimanter, le sens longitudinal étant défini comme pris le long de l'arc de cercle générateur du segment cylindrique.

2. Procédé de fabrication d'un aimant de ferrite selon la revendication précédente, caractérisé en ce qu'on utilise deux mâchoires comportant chacune un élément en matériau perméable magnétiquement (13, 15) qui laisse en partie découvertes les extrémités de la pièce à aimanter.

3. Procédé de fabrication d'un aimant de ferrite selon l'une des revendications 1 ou 2, caractérisé en ce qu'on donne aux surfaces d'extrémités du dit élément en matériau perméable magnétiquement une forme courbe (18, 19, figure 2).

4. Procédé de fabrication d'un aimant de ferrite selon l'une des revendications 1 ou 2, caractérisé en ce qu'on donne aux surfaces d'extrémités du dit élément en matériau perméable magnétiquement une forme plane située en biais par rapport aux axes de la pièce à aimanter (18, 19, figure 4).

5. Procédé de fabrication d'un aimant de ferrite selon l'une quelconque des revendications précédentes, caractérisé en ce qu'on constitue une mâchoire au moyen de trois parties (12, 13, 12) ayant des lignes de séparation au niveau de la surface de contact entre la mâchoire et la pièce de ferrite, dont seule la partie centrale (13) est en matériau magnétique.

6. Procédé de fabrication d'un aimant de ferrite selon la revendication précédente, caractérisé en ce qu'on utilise deux parties d'extrémité symétriques (12, 12).

7. Aimant fait d'un ferrite homogène, ayant une forme de secteur simple, et aimanté avec une orientation radiale des grains partout dans l'aimant, caractérisé en ce qu'il comporte au moins une zone d'extrémité dont l'amplitude du flux magnétique dans le ferrite diminue progressivement en approchant de l'extrémité (4).

## Patentansprüche

1. Verfahren zur Herstellung eines Magneten (20) für Motoren, wobei ein Teil mit der Form eines Segmentes eines Zylinders in einem Magnetfeld durch Zusammenpressung von Ferritpulver in einer Matrize in Form eines Segmentes eines Zylinders erzeugt wird, wonach dieser Teil gesintert, d. h. auf eine hohe Temperatur gebracht und zum Schluß dadurch magnetisiert wird, daß dieser Teil zwischen zwei Backen (12, 13; 14, 15) aus magnetisierbarem Material gebracht wird, welche die Schenkel eines Elektromagneten sind und die den genannten Teil (20) je an einer der zylinderförmigen Flächen kontaktieren, dadurch gekennzeichnet, daß die Längsrichtung bestimmt wird längs des Bogens des Kreises, den das Zylindersegment bildet, indem wenigstens eine Backe verwendet wird, die einen Teil (13, 15) aus einem magnetisierbaren Material enthält, wodurch die länglichen Endabschnitte des zu magnetisierenden Teils unbedeckt bleiben.

2. Verfahren zur Herstellung eines Ferritmagneten nach dem vorhergehenden Anspruch, dadurch gekennzeichnet, daß zwei Backen verwendet werden, die je einen aus einem magnetisierbaren Material hergestellten Teil (13, 15) aufweisen, wobei die Endabschnitte des zu magnetisierenden Teils teilweise unbedeckt bleiben.

3. Verfahren zur Herstellung eines Ferritmagneten nach einem der Ansprüche 1 oder 2, dadurch gekennzeichnet, daß die Oberflächen der Endabschnitte des genannten Elementes aus magnetisierbarem Material eine gekrümmte Form (18, 19, Fig. 2) erhalten.

4. Verfahren zur Herstellung eines Ferritmagneten nach einem der Ansprüche 1 oder 2, dadurch gekennzeichnet, daß die Oberflächen der Endabschnitte des genannten Elementes aus magnetisierbarem Material eine flache Form erhalten auf beiden Seiten der Achsen des zu magnetisierenden Teils (18, 19, Fig. 4).

5. Verfahren zur Herstellung eines Ferritmagneten nach einem der vorstehenden Ansprüche, dadurch gekennzeichnet, daß eine Backe aus wenigstens drei Teilen (12, 13, 12) gebildet wird, deren Trenniinien auf dem Pegel der Kontaktfläche zwischen der Backe und dem Ferritteil liegen, von dem nur der zentrale Teil (13) aus magnetischem Material besteht.

6. Verfahren zur Herstellung eines Ferritmagneten nach dem vorhergehenden Anspruch, dadurch gekennzeichnet, daß zwei Teile mit symmetrischen Endabschnitten (12, 12) verwendet werden.

7. Homogener Ferritmagnet mit der Form eines einfachen Segmentes und magnetisiert mit einer radialen Orientierung der Körner des ganzen Magneten, dadurch gekennzeichnet, daß er wenigstens eine Endzone aufweist, wobei die Amplitude des magnetischen Flußes in dem Ferrit in Richtung des Endteils (4) progressiv abnimmt.

## Claims

1. A method of manufacturing a magnet (20) for motors in the form of a segment of a cylinder, in which method a piece is produced by pressing ferrite powder, under the influence of a magnetic field, in a mould in the form of a segment of a cylinder, whereafter it is sintered, *i.e.* heated at a high temperature, and finally magnetized by placing it between two dies (12, 13; 14, 15) of a magnetizable material, which are the armatures of an electromagnet and which each contact said piece (20) along one of the cylindrical surfaces, characterized in that, for the final magnetization, a portion (13, 15) of at least one of the above-mentioned dies, which portion is made of a magnetizable material,
leaves the longitudinal end portions of the piece to be magnetized partly uncovered, the longitudinal direction being defined as being taken along the arc of the circle which forms the cylinder segment.

2. A method of manufacturing a ferrite magnet as claimed in the preceding Claim, characterized in that use is made of two dies, each of which comprises a portion made of a magnetizable material (13, 15) which leaves the end portions of the piece to be magnetized partly uncovered.

3. A method of manufacturing a ferrite magnet as claimed in 1 or 2, characterized in that the end faces of said portion of a magnetizable material are curved (18, 19, Figure 2).

4. A method of manufacturing a ferrite magnet as claimed in 1 or 2, characterized in that the end faces of said portion of a magnetizable material are planar, extending slantwise with respect to the axes of the piece to be magnetized (18, 19, Figure 4).

5. A method of manufacturing a ferrite magnet as claimed in any one of the preceding Claims, characterized in that a die is formed which comprises three portions (12, 13, 12) having parting lines situated at the location of the contact surface between the die and the ferrite piece, only the central part (13) of said die being made from a magnetic material.

6. A method of manufacturing a ferrite magnet as claimed in the preceding Claim, characterized in that use is made of two symmetrical outer portions (12, 12).

7. A magnet made of a homogeneous ferrite, having a simple sectoral shape and being magnetized so that the grains are radially oriented throughout the magnet, characterized in that it comprises at least one end region whose amplitude of the magnetic flux in the ferrite decreases progressively towards the end (4).
